# EUROPEAN PATENT SPECIFICATION

(11) **EP 3 335 964 B1**
(45) Date of publication and mention of the grant of the patent: **10.11.2021**
(21) Application number: 16204779.9
(22) Date of filing: 16.12.2016
(51) Int. Cl.: B62B 7/10, B62B 3/02

(54) **MULTI-FUNCTIONAL UTILITY CART**
MULTIFUNKTIONALER NÜTZLICHER WAGEN
CHARIOT MULTIFONCTIONS

(43) Date of publication of application: 20.06.2018
(73) Proprietor: RECARO Child Safety GmbH & Co. KG, 70597 Stuttgart (DE)
(72) Inventor: Jansen, Olaf, 3814 SL Amersfoort (NL); Gerretsen, Robbert, 2282 PM Rijswijk (NL); Quint, Dirk, 3941 MT Doorn (NL)
(74) Representative: Perani & Partners S.p.A.

(56) References cited:
- US-A- 5 033 758
- US-A- 5 123 665
- US-A- 5 833 251
- US-A1- 2014 353 945
- US-A1- 2016 031 469
- US-A1- 2016 167 688

## Description

The disclosure relates generally to a multi-functional utility cart having a non-collapsible rigid base frame and a collapsible basket thereon, wherein the basket is adapted to be removably connected to a kid-receiving unit (such as an infant carrier, baby carrycot, infant seat, toddler seat, child seat, kid seat, child car seat, matching platforms, and the like, as well as arbitrary combinations thereof). This utility cart is pushed or pulled by pedestrians. In particular, the multi-functional utility cart will be used by families, preferably during urban and/or outdoor activities. The multi-functional utility cart allows stepless transition between regular stroller applications and so-called Bollerwagen (which term is to be explained below) applications.

In general, conventional "handcarts" are already known for quite a long time. Handcarts represent non-motorized vehicles by which pedestrians can transport loads. Handcarts are pushed or pulled. Different types of handcarts are known which are substantially distinguished by the number of wheels and axles. Typically, handcarts are vehicles having four wheels. Shopping charts, strollers, and doll carriages, for example, are pushed. Other handcarts, which have at least one wheel, can be pulled (such as trailers, bicycle trailers and the like).

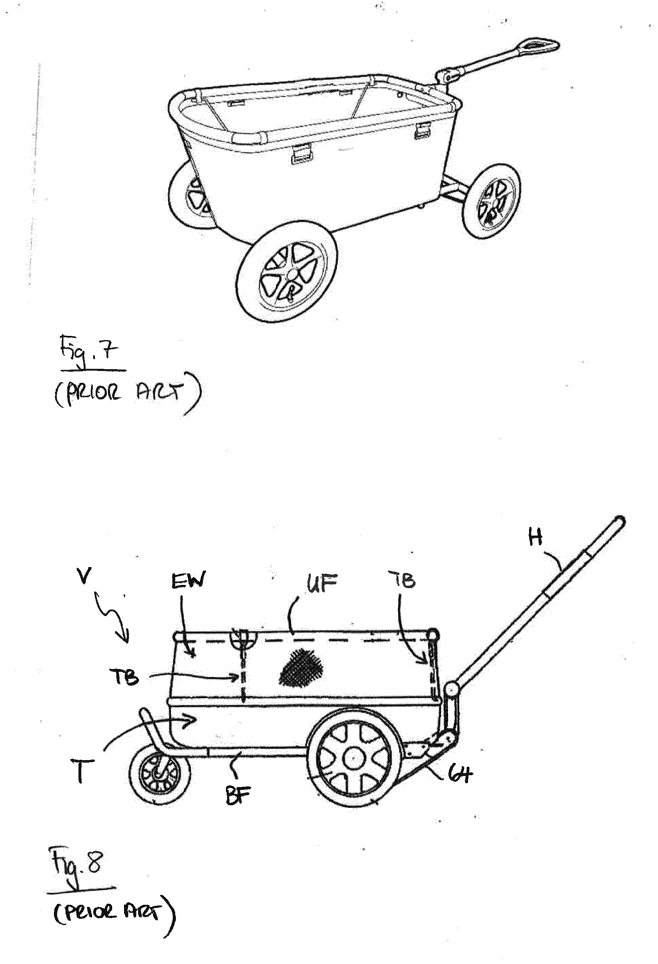

A very specific type of handcart is a so-called "Bollerwagen". Bollerwagen have been used, and still are intensely used, in Europe, particularly in the Netherlands and Germany for transporting loads and children at almost every age. Recently, Bollerwagen have become more and more popular again. An overview on currently existing Bollerwagen can be retrieved under the Internet link "www.bolderkar-shop.nl". A progressive (foldable) Bollerwagen is commercially available under the brand "Kyboka" (www.kyboka.com), which is shown in an erected state in Fig. 7.

In general, "Bollerwagen" are characterized in that they comprise a, preferably rigid, base frame in a lower portion of the cart, and a circumferentially extending basket, which is vertically erectable and collapsible, in an upper portion of the cart. Typically, the basket is open to the top so that the basket can be accessed from each lateral direction as well as from above. The basket typically has a (flexible) wall defining a circumferentially closed interior volume. The basket and/or the base frame may define the bottom of the interior, which is closed as well. A (e.g., wooden) base plate might be used as the bottom, which plate can be part of the basket or the base frame, on which the basket is mounted. Normally, conventional Bollerwagen further include a push/pull bar, i.e. a handle. The wheels of the cart are sometimes removably attached to the base frame.

The dimensions of the Bollerwagen basket are usually chosen such that toddlers and kids as well as larger items such as boxes, suitcases, sunshades and the like can be transported therein. The wheels most times are relatively huge so that the Bollerwagen can be used in each terrain, in particular in the free nature such as at the beach, in the forest, but also in urban environments.

This general definition of "Bollerwagen", as given above, will apply throughout the entire description below.

Coming back to a more general type of the handcarts, conventional strollers may include a dedicated child seat (over 9 months and able to sit upright, until 3-4 years) as well as adapters for securing an infant (baby from 0-9 months) carrier (such as a carrycot, prambody, bassinet, and the like) or a toddler seat to a (base) frame of the stroller. In some embodiments the infant carrier/toddler seat, which form part of the overall stroller, are attached directly to the stroller, i.e. without adapters. Strollers normally comprise a basket as well, which is way smaller than the ones of the Bollerwagen. The seat is typically configured to receive a relatively larger child, such as a toddler, and may typically not be intended to seat a relatively smaller child, such as an infant or a newborn. Instead, adapters may be used to selectively attach the infant seat to the base frame of the stroller. The infant seat may be used to accommodate a smaller child in the stroller until the child grows into a size large enough to be seated within the child seat. Thus, strollers may be used to transport children of various sizes.

Other types of known strollers may include various attachment mechanisms that allow for different types of seating mechanisms to be secured to the base frame of the stroller. Corresponding adapters for either type of stroller typically project upwardly from lateral parts of the base frame of the stroller, and may each be positioned to selectively engage with retaining mechanism located on the (infant or child) seat.

The document US 2015/0042056 A1 discloses a corresponding stroller which includes a base frame and at least two adapters attached to the base frame. An infant seat may be selectively engaged with the base frame. The base frame may have a first side and a second side that generally oppose one another. The adapters may each be configured to selectively engage with the infant seat. One of the adapters may be positioned on the first side of the base frame, and a remaining adapter may be positioned on the second side of the base frame. The adapters may be rotatable between a first position and a second position. In each case the basket is difficult to access. The basket collapses as soon as the base frame is folded.

Another conventional stroller is commercially available under the brand "Coolamon" (see also http://www.inyakart.com.au"). A first embodiment of this Coolamon stroller has a collapsible base frame to which a foldable basket is coupled such that the basket is unfolded together with the unfolding movement of the base frame. This means that the basket and the base frame are folded/unfolded simultaneously. It is not possible to unfold them independently from each other. The first embodiment further comprises a child seat, which is fixedly attached to an element of an upper frame of the basket extending in a width direction of the basket of a front side or rear side thereof. The seat, the upper frame of the basket, and the base frame are coupled permanently to each other in a manner which guides the seat, the upper frame, and the base frame along each other upon folding and unfolding operation of the stroller.

A second embodiment of the "Coolamon" stroller is described in WO 2004/005048 A1 and shown in Fig. 8 (corresponding to Fig. 4a of WO '048). This second embodiment represents an all-terrain vehicle V. The vehicle V includes a dual rear wheel arrangement and a front single wheel rotatably mounted on a base frame BF. Also mounted on the base frame BF is a step climber SC and brake. Extending upwardly from the base frame BF is a handle H including a convenience pocket (not shown) extending laterally between spaced bars of the handle H. The handle H extends over a rigid tray T and is articulated about a lockable hinge, whereby to lock the handle H in a range of different inclinations and positions, including a fold down horizontal position. The tray T is a molded plastic tub of strong abrasion resistant plastic material such as polypropylene or high density polyethylene which is of sufficient thickness to withstand extended use and may have a wall thickness of 2 to 5 mm, with wall join areas being thicker to give the tray T added rigidity. An internal volume and carrying capacity of the tray T is extended by a collapsible upper extension wall EW comprising a flexible woven material attached to a floating upper frame UF. In use, the upper frame UF is supported above the tray T by spacing means in the form of turn buckles TB (expressed by dashed lines) which are axially adjustable to ensure that the extension wall EW is held under tension. The turn buckles TB may be engaged at their upper and lower ends to the upper frame UF and tray T by simple angled ends inserted in complementary bores in the upper frame UF and tray T, respectively. To collapse the extension wall EW and the upper frame UF, the upper and lower ends of the turn buckle TB may be disengaged from the bore so that the upper frame UF spaced to fit inside the tray T when collapsed, rests snuggly within the tray T. The vehicle V should include at least three turn buckles TB located on each side of the tray T towards the front and a single turn buckle TB located centrally at the rear of the tray T to give the upper frame UF adequate stability and support. Regarding the strength, rigidity and stability of the material wall EW, it has been found that if the cloth is mounted so that its weave extends at an angle 45 degrees to the horizontal these positive properties are maximized. The wall EW is less rigid when the weave is oriented along vertical and horizontal lines relative to the frame members.

WO '048 further suggest to include a child's seat or other support such as a baby capsule or toddler seat for carrying a child safely on the all-terrain vehicle V. However, WO '048 does not explain where and how to couple the seat or support to the vehicle.
The document US 2016/0031469 A1 discloses a wagon with displaceable wall for installing a child seat.

Bollerwagen and strollers have different advantages and disadvantages, wherein the advantages of one of them can not be achieved by the other one.

Therefore, it is an object of the present invention to provide an improved multi-functional utility cart capable of realizing both advantages of the strollers and the Bollerwagen at the same time.

This object is solved by the claim 1.

A particular focus has been put on the versatility of the cart thereby meeting the mobility needs of parents and children which change over time (i.e. from new born baby to pre-school child), during activities (e.g. transfer between home and kindergarten, shopping, beach visits, etc.) and in different environments. This called for a phased approach based on the kid's age, with emphasis on their needs during transitions between activities and surroundings/environments, for each given phase. The utility cart of the present invention is "no compromise" premium product which allows great service experience.

The utility cart of the invention overcomes general obstacles such as transport of mixed (e.g. differently sized and extremely large) goods, changing weather conditions, mixed terrains, stairs, in and out cars, in and out public transportation, etc.). The cart provides sufficient storage options. The cart has an easy foldability.

The cart is easily convertible from a stroller to a Bollerwagen, and vice versa. The cart grows with the kid, from new born/infant age to child age. The cart is provides a large storage space, which is accessible from each side (i.e. from the front, back, and both lateral sides) even if the kid-receiving unit is installed. The cart can be used indoors and outdoors, even in rough terrain. The cart can be pushed or pulled. The cart can be folded easily, thereby reducing the required storage space maximally.

According to the invention the basket comprises a basket frame which includes a rim frame and a folding frame, wherein the folding frame connects the basket frame to the base frame and is preferably provided in at least one of the lateral (vertical) sections of the basket.

The basket can be erected and collapsed independently from the base frame. The rim frame takes up the main loads (in particular the weight of the kid-receiving unit and driving forces) acting on the cart, and transfers the loads to the base frame. The basket is reinforced by the folding frame, which forms part of the basket frame. The basket frame is sufficiently stiff and rigid to take up huge loads, thereby allowing positioning of the kid-receiving unit on top of the basket, in particular on top of the rim thereof.

The basket frame is collapsible, the rim frame is rigid, and the folding frame is foldable, preferably scissor-like.

Further, the folding frame might comprise at least one cross frame, which includes at least first and second, preferably straight, cross members.

The cross members can be positioned within wall elements of the basket, thereby hiding them. The optical appearance is light and free, although the basket is extremely strong. The cross members might implement a scissor mechanism which is easy to implement and maintain.

In this case the cross members are slidingly coupled to each other, wherein lower end portions of the cross members are rotatably connected to the base frame, preferably to a rear element of the base frame, and upper end portions of the cross members are coupled to the rim frame.

The cart might further comprise a handle being connected to the basket (only).

By coupling the handle to the basket only, the volume of the cart in the folded state can be minimized. The aesthetical appearance can be enhanced. Optionally, the handle can be provided at different locations on the rim of the basket, thereby ensuring good accessibility of the basket, in particular if the kid-receiving unit is used as well.

The cart might further comprise a cable-pull mechanism being coupled (to the handle and) the basket frame only, wherein the cable-pull mechanism preferably comprises a cable and a rotation body being rotatably connected to the handle, the rim frame and the folding frame. Additionally or alternatively, the cable could be replaced by rigid metal strip or similar.

The cable-pull mechanism assists the user in folding/unfolding the cart in a controlled manner. Forces acting on the cart during folding/unfolding are better distributed over the entire cart, in particular to the front and rear portions thereof.

Even further, the handle might be supported and configured such that, in a folded state of the cart, the handle is arranged closely above the base frame, and the rim frame might be arranged and configured such that the rim frame dips into the base frame and is surrounded by the handle upon folding of the basket.

This also minimizes the space required if the cart is in the folded state.

In particular, the base frame comprises: at least one front element; at least one intermediate element; and at least one rear element; wherein the front elements, the intermediate elements, and the rear elements commonly form the base frame in a circumferentially closed manner.

The closed shape of the base frame enhances the stability and rigidity, in particular torsional rigidity, of the cart. Higher loads can be transported, in particular in the Bollerwagen state.

Preferably, the intermediate elements are inclined such that one of the front and rear elements is arranged above the other one.

This measure allows rotational support of the wheels in the base frame.

With another embodiment at least the front and rear elements are configured as, or are configured to receive, trays (such as an additional reinforcing bottom plate) forming the, preferably removable, bottom of the basket.

The tray(s) enhance again the stability and rigidity. The cart can be cleaned easily, even if liquids have leaked into it.

Other objects and advantages of the disclosed system will be apparent from the following description, the accompanying drawings and the appended claims.
Fig. 1 shows perspective views of a multi-functional utility cart of the present invention with (Fig. 1A) and without (Fig. 1B) a kid-receiving unit on top.
Fig. 2 shows side views of different states, namely of a regular "Bollerwagen state" (Fig. 2A), an extended "Bollerwagen state" (Fig. 2B), a "seat state" (Fig. 2C), and an "infant carrycot state" (Fig. 2D).
Fig. 3 shows a schematically illustrated side view of an embodiment of the cart in an unfolded state (Fig. 3A) and folded state (Fig. 3B) of the basket without wall elements.
Fig. 4 shows an enlargement of the folding mechanism of Fig. 3.
Fig. 5 illustrates an operating schematic diagram of the folding mechanism of Figs. 3 and 4.
Figs. 6 shows perspective views of different stages (Figs. 6A to 6C) of a folding/unfolding process of the cart of Figs. 3 to 5.
Fig. 7 shows a perspective view of a conventional Bollerwagen.
Fig. 8 shows a side view of a conventional all-terrain vehicle.

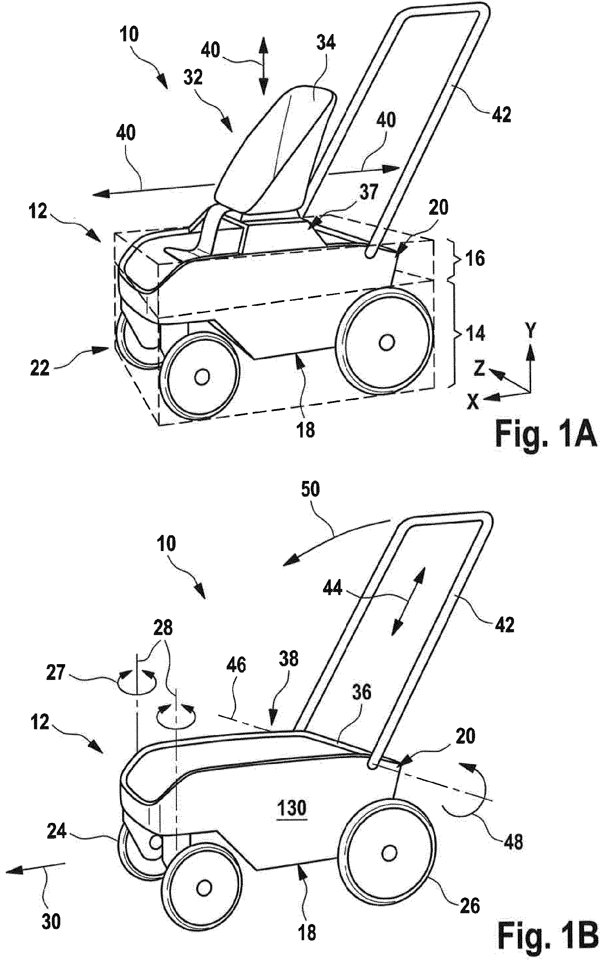

With common and simultaneous reference to Figs. 1A and 1B the disclosed multi-functional utility cart, generally designated 10, will be described.

The cart 10 comprises a chassis 12 having lower and upper portions 14, 16. The chassis 12 preferably has one lower portion 14 and one upper portion 16 only, wherein the upper portion 16 is arranged on top of the lower portion 14 in a vertical direction Y. The lower and upper portions 14, 16 of the chassis 12 are indicated in Fig. 1A and surrounded by means of dashed lines. The lower portion 14 of the chassis 12 is substantially defined by a rigid base frame 18, and some minor parts of a foldable/collapsible basket 20 which is coupled, preferably in a fixed manner, to the base frame 18. The coupling, in particular of a wall structure (explained below) thereof, can be achieved by, for example, adhesives, ribbons, Velcro fastenings, press buttons, and the like.

In general, the chassis 12 substantially comprises the non-collapsible rigid base frame 18, and the collapsible basket 20. The base frame 18, a structure of which will be explained in further detail below, is located in the lower portion 14 only, which lower portion 14 accommodates a lower part of a volume taken by the entire chassis 12. The lower portion 14 is defined substantially by at least one of the base frame 18 and the wheels 22.

The base frame 18 is rigid because the base frame 18 cannot be collapsed at all. The base frame 18 substantially extends in one (horizontal) plane (e.g., the XZ plane), and exemplarily comprises at least one strut element, as will be explained below. As indicated in Fig. 1 lateral elements of the base frame 18 might include a (smaller) step in the vertical direction Y, wherein the base frame 18, in this case, is still considered to "substantially extend in one plane". Preferably, the base frame 18 is circumferentially closed, i.e. not open at any side. This increases the stability and rigidity of the base frame 18 and ensures the capability of taking up (greater) loads introduced by the basket 20, as will be explained in more detail below as well.

One or more wheels 22, even of different (diameter and/or width) sizes, such as front wheels 24 and rear wheels 26 are attached to the base frame 18, but do not form part of the base frame 18. The one or more wheels 22 can be attached to the base frame 18 in a removable manner (e.g. horizontally), thereby minimizing storage space in the folded state of the cart 10.

One or more of these wheels 22 can be supported pivotally, as indicated by arrow 27 in Fig. 1B. In the example of Fig. 1 the front wheels 24 are supported rotationally about (vertically orientated) rotational axes 28 which are orientated parallel to a vertical axis Y of a Cartesian coordinate system XYZ. In the following the axis X represents a longitudinal direction of the cart 10. The axis Z represents a width direction of the cart 10. The cart is pushed/pulled substantially in the longitudinal direction X of the cart 10 (see also travelling direction 30 in Fig. 1B).

The basket 20 is erectable and collapsible in the vertical direction Y. The basket 20 is foldable and preferably made of, for example, fabric or cloth. Figs. 1A and 1B respectively show the erected state of the basket, and thereby an "unfolded state" of the cart 10. The carts 10 of Figs. 1A and 1B are identical with the exception of a kid-receiving unit 32 (0-6 years, for example), which is present in Fig. 1A only and is represented exemplarily by a child seat 34. The kid-receiving unit 32 is always provided (on top) of the basket 20, as will be explained in more detail below. In the example of Fig. 1A, the child seat 34 is, for example, clamped onto an upper rim 36 of the basket 20, which rim 36 is correspondingly configured for receiving the child seat 34. It goes without saying that coupling/connecting the kid-receiving unit 32 to the basket 20 might be achieved in other ways than clamping (such as positive engagement, buttons, and the like).

The kid-receiving unit 32 is positioned above a top opening 38 of the basket 20. In Fig. 1 the top opening 38 is completely open. However, the top opening can also be partially closed, e.g. by means of a lid or the like, so that an interior of the basket 20 is partially covered (not shown in Fig. 1). The top opening 38 is circumferentially limited by the upper rim 36 of the basket 20. Preferably, the top opening 38 covers substantially the same area as the base frame 18, when viewed from above along the vertical direction Y. However, it is also possible to make the top opening 38 smaller or larger. It is preferred to have the top opening 38 relatively huge so that the interior of the basket 20 can be accessed easily from above and from each lateral direction, as shown in Fig. 1B. As soon as the kid-receiving unit 32 is positioned on top of the basket 20, the interior of the basket 20 can still be accessed easily, because the top opening 38 is very huge.

Optionally, the kid-receiving unit 32 can be configured such that position thereof can be adjusted relative to the basket 20, as indicated by arrows 40 in Fig. 1A which represent optional relative-position adjustment directions. However, it is preferred that the kid-receiving unit 32 remains fixed in one position only.

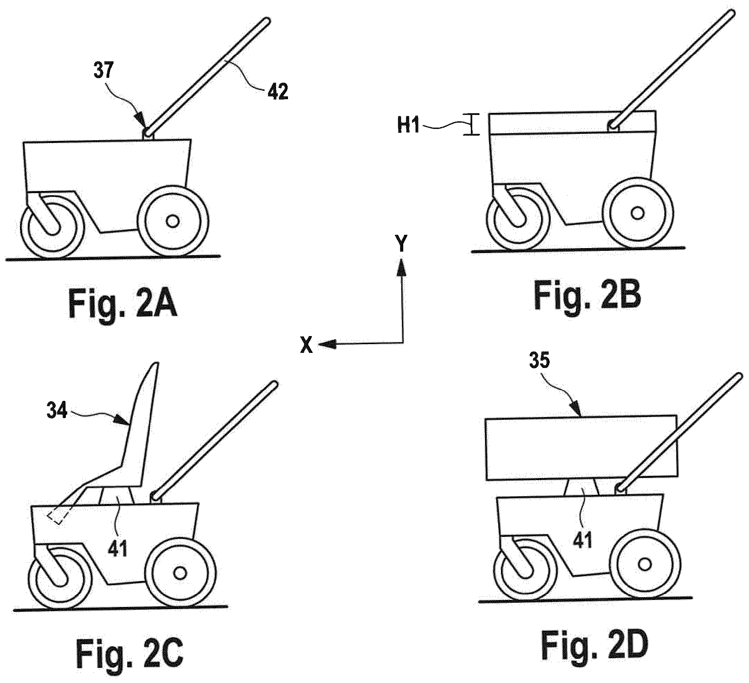

It is to be noted that in Fig. 1A only one kid-receiving unit 32 is shown. However, it is clear that more than one kid-receiving unit 32 can be put on the basket 20 at the same time. For example, two child seats 32 can be put on the rim 36 in order to accommodate twins. In this case one of the seats 32 can be orientated towards the front end, and the other seat 32 can face the rear end of the cart 10. Alternatively, the two seats 32 can be arranged in series, i.e. one behind the other and looking into the same direction. Further, different types of kid-receiving units 32 (not shown) can be put on the basket 20 at the same time such as a child seat 34 and an infant carrycot 35 (Fig. 2D).

Figs. 2A ― 2D show side views of different states of the cart 10 of Fig. 1. Fig. 2A shows an (unfolded) regular "Bollerwagen state" in which no kid-receiving unit 32 is put on top of the (erected) basket 20. Fig. 2B shows an (unfolded) extended "Bollerwagen state" which is almost the same as the one of Fig. 2A, wherein in Fig. 2B the basket 20 is additionally raised by an additional height H (cf. dashed line). Fig. 2C shows the (unfolded) "seat state" in which the seat 32 (cf. also Fig.1) is put on top of the basket 20 by means of, for example, coupling adapters 41 which engage the rim 36. Fig. 2D shows the (unfolded) "infant carrycot state" in which an infant carrycot 35 might be coupled, for example, by means of the adapters 41 to the rim 36 of the basket 20. Other types of kid-receiving units 32 can be put on the basket 20 similarly.

Returning to Fig. 1, the cart 10 can further comprises a handle 42. The handle 42 is connected to the basket 20, preferably to the rim 36. In particular, the handle 42 is connected to the basket 20 only. In Fig. 1 the handle 42 is provided at the rear end of the basket 20. However, the handle 42 could also be provided (optionally) at the front end. The U-shaped handle 42 might be longitudinally extendible (cf. arrow 44 in Fig. 1B). The handle 42 might take other shapes.

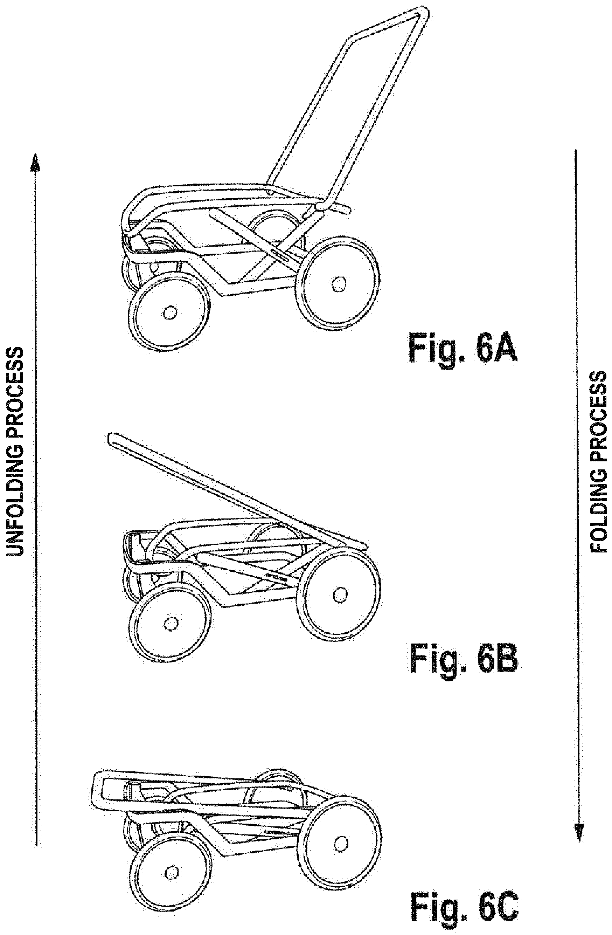

The handle 42 is supported in the basket 20 in a pivotal manner. The handle 42 rotates about an axis 46, as indicated by an arrow 48 in Fig. 1B. Optionally, the folding process of the cart 10 is initiated by pressing the handle 42 forward and downwards (cf. arrow 50 in Fig. 1B), as will be explained in more detail below. The handle 42 can be dimensioned such that the handle 42 is positioned outside and around the basket 20 in a folded state (Fig. 6C). In this case laterally positioned elements of the handle 42 have a distance in the width direction Z which is greater than a width of the basket 20. Thus, the handle 42 is provided and supported outside the basket 20, as shown in Figs. 1, 3 and 6.

Alternatively, the handle 42 might be provided and supported inside the (volume of) the basket 20 (not shown). In this case the handle 42 can be folded into the interior of the basket 20, thereby achieving a very compact folding state. Still alternatively, the handle 42 can be detachably connected to the basket 20, in particular on top of the rim 36 thereof, as exemplarily shown in Fig. 2. This might be achieved by another adapter (see Fig. 2A), which adapter might comprise an identical engagement mechanism (not shown) as the adapter 37 of the kid-receiving unit 32 in Fig. 1A. The rim 36 might comprise a plurality of engagement-mechanism receiving elements (not shown) such as recesses which can be arbitrarily distributed circumferentially along the rim 36 (not shown). This adapter-based solution for attaching/detaching the handle 42 facilitates the accommodation of the different types of kid-receiving units 32 on (top of) the basket 20. For example, the infant carrycot 35 (Fig. 2D) has a much longer longitudinal dimension than the seat 34 (Fig. 2C). Also, the freely selectable (longitudinal) position of the handle 42 allows an easy reversal of the travelling direction 30, e.g., by changing the position of the handle 42 from the rear to the front of the cart 10.

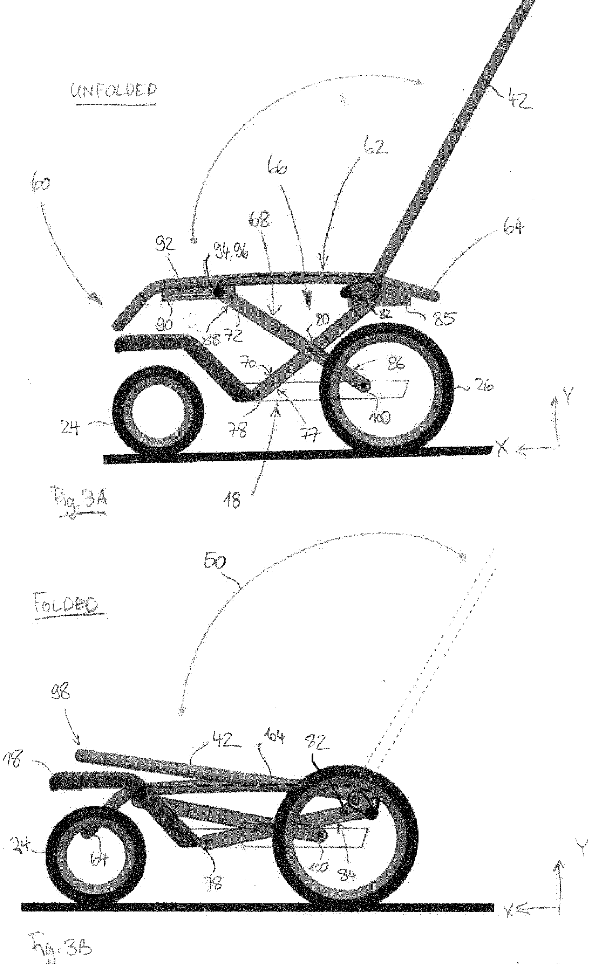

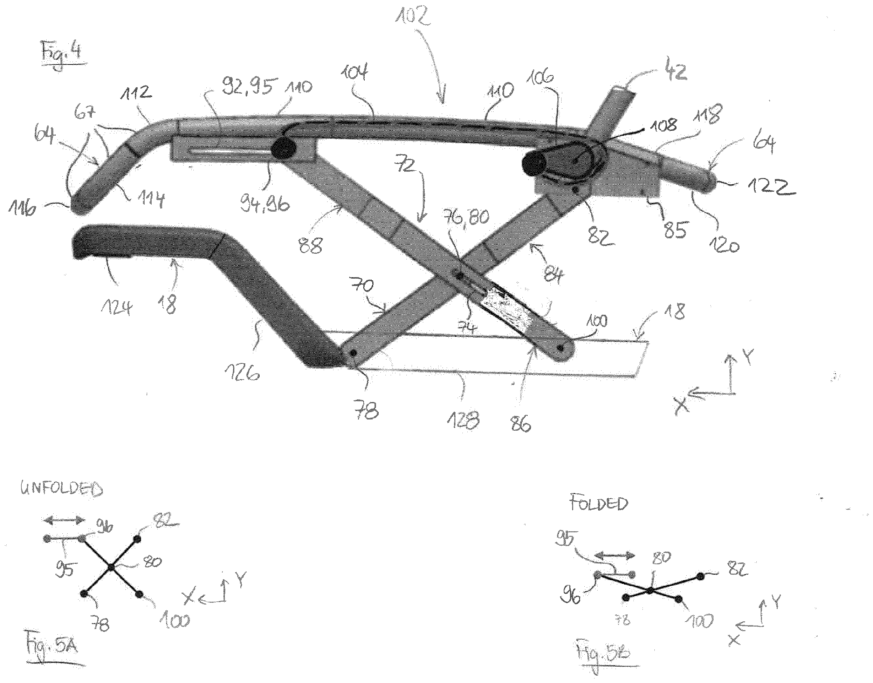

In the following the folding process and the folding mechanism of the basket 20 will be explained in more detail with (common and simultaneous) reference to Figs. 3 ― 5. Fig. 3 shows a schematically illustrated side view of a "stripped" embodiment of the cart 10 in an unfolded state (Fig. 3A) and folded state (Fig. 3B) of the basket 20, wherein a basket casing (i.e. wall elements) is not shown for enhancing an easy understanding of the basic folding mechanism. Fig. 4 shows an enlargement of the folding mechanism of Fig. 3, wherein relevant elements are depicted only so that the wheels 22 and the like are omitted. Fig. 5 illustrates an operating schematic diagram of the folding mechanism of Figs. 3 and 4 in a conceptualized manner.

With reference to Fig. 3 the cart 10, in general, comprises an overall frame structure 60. The frame structure 60 includes the rigid non-collapsible base frame 18 in the lower portion 14 and a collapsible basket frame 62 coupled to the rigid base frame 18. The basket frame 62 is part of the basket 20, and is positioned in the lower and/or upper portion 14, 16 of the cart 10 depending on whether or not the basket 20 is erected. The basket frame 62 comprises a rim frame 64, which defines the rim 36 of the basket 20, and a folding frame 66, which foldably connects the rim frame 64 to the base frame 18. Each of the rim frame 62 and the folding frame 66 might comprise a plurality of frame members 67, although the rim frame 64 is preferably formed integrally (i.e. as one single piece). The folding frame 66 represents the folding mechanism required for erecting and collapsing the basket 20. The folding frame 66 takes up the main loads (i.e. forces) introduced by the kid-receiving unit 32 (not shown in Figs. 3-5) and when pushing/pulling the cart 10 via the handle 42. The folding frame 66 provides stability, general rigidity and in particular torsional rigidity to the basket 20 when loaded.

In the example of Figs. 3-5 the folding frame 66 is substantially defined by a pair of cross frames 68, wherein one cross frame 68 is provided in each lateral section (i.e. in left and right sides) of the basket. Alternatively, only one single folding frame 66 can be provided in one of the lateral sections of the basket 20. When viewed vertically from above, the basket 20, and also the entire cart 10, can be divided (e.g., clockwise in a circumferential direction) into a front section, a right lateral section, a rear section, and a left lateral section, the sections forming a closed circumference (not shown in the Figs. 3 - 5).

Each cross frame 68 is substantially formed by first and second cross members 70, 72. The cross frame 68 can comprise more than two cross members 70, 72, The cross members 70, 72 exemplarily form a scissor mechanism, functionality and structure of which will be explained in detail below. The first and second cross members 70, 72 can be formed by straight struts which are preferably made of a durable and light material (such as fiber composite), like the entire frame components.

The cross members 70, 72 are coupled to each other in a respective central section thereof. For example, as shown in Fig. 4, one of the cross members 70, 72 comprises a longitudinally extending long hole 74 in its central section, and the other cross member 72, 70 comprises a pin 76 in its central section, which pin 76 passes horizontally through the long hole 74. The long hole 74 and the pin 76 movably (i.e. slidingly) guide the adjacent cross members 70, 72 along each other during folding/unfolding, as will be explained in more detail below. A lower first end portion 77 of the first cross member 70 is stationary (relative to the entire cart 10) and permanently fixed to and supported by the base frame 18 in a stationary first rotation point 78. The first cross member 70 rotates about the first rotation point 78 while the base frame 18 rests calm relative to the ground (Figs. 3 and 5) during folding/unfolding. The hole-pin connection 74, 76 defines a first sliding (connection) point 80 (Figs. 4 and 5). Each of the first and second cross members 70, 72 slides along the first sliding point 80 during folding/unfolding. A second (relatively moving) rotation point 82 is defined by the pivotal connection between an upper second end portion 84 of the first cross member 70 and the rim frame 64 and/or the handle 42. Both the first cross member 70 and the rim frame 64/handle 42 rotate about the second rotation point 82 which moves relative to the base frame 18 during the folding/unfolding process. A supporting element 85 (Figs. 3A and 4) can be provided between the first cross member 70, the handle 42, and the rim frame 64. The supporting element 85 can have a flat shape of a plate, preferably being connected rigidly to a bottom side or an outer side of the rim frame 64 in the rear lateral section thereof. The first cross member 70 can be rotatably attached to an inner side of the supporting element 85, wherein the handle 42 can be rotatably attached to an outer side of the supporting element 85. It is clear that the relative positioning of the handle 42, the rim frame 64, the first cross member 70, and the supporting element 85 can be arbitrarily changed according to designers' needs.

First (lower) and second (upper) end portions 86, 88 of the second cross member 72 are connected to the base frame 18 and a guiding slide rail 90, respectively.

The guiding slide rail 90 can be flat plate which can be connected to the bottom side or an inner/outer side of the rime frame 64 in a front lateral section thereof. The slide rail 90 can comprise a long hole 92 through which a pin 94, which is connected to the upper second end portion 88 of the second cross member 72 in a laterally projecting manner, passes horizontally for movably (i.e. slidingly) guiding the rim frame 64 and the folding frame 66 to each other during folding/unfolding. A corresponding sliding path 95 is illustrated in Figs. 5A and 5B, wherein corresponding sliding movements are illustrated by corresponding arrows (not designated in Fig. 5). The pin 94 represents a second (sliding) connection point 96 along which the rim frame 64 and the second cross member 72 move/slide. The rail 90 can be positioned in the vertical plane XY, wherein the long hole 92 is preferably orientated horizontally and substantially extends in the longitudinal direction X of the cart 10.

The rail 90 and its long hole 92 are arranged and configured such that the front section of the rime frame 64 can be positioned between and below the front section of the base frame 18, as shown in Fig. 3B, when the cart 10 is in the folded state. It is clear that the front section of the rim frame 64 is configured correspondingly, as will be described below. Further, the handle 42 is arranged and configured such that it is positioned closely above the base frame 18 in the folded state (Fig. 3B). A transversal section 98 of the handle 42, which extends in the width direction Z, is located vertically above the front section of the base frame 18, and above the front wheels 24 in the folded state. Thus, the cart 10 can be "compressed" into the lower portion 14 in the folded state.

Also the lower first end portion 86 of the second cross member 72 is stationary and permanently fixed to and supported by the base frame 18 in a stationary third rotation point 100. The second cross member 72 rotates about the third rotation point 100 while the base frame 18 rests calm relative to the ground (Figs. 3 and 5) during folding/unfolding.

It is clear that the specifically shown rotation and sliding points 78, 80, 82, 96 and 100 could be configured differently so that the sliding points 80, 96 become rotation points 78, 80, 100 and/or the rotation points 78, 80, 100 become sliding points 80, 96, and vice versa.

Even further, there can be provided a cable-pull mechanism 102 (Fig. 4). The cable-pull mechanism 102 comprises at least a cable 104 and (optionally) a rotation body 106. The cable 104 is coupled to the upper second end portion 88 of the second cross member 72, and to the upper second end portion 84 of the first cross member 70 via the rotation body 106. The rotation body 106 rotates about a horizontal rotation axis 108 (Fig. 4) which extends parallel to the width direction Z and to an imaginary connection line (not shown and designated in the Figs) between the second left and right rotational points 82. The rotation body 106 can be attached, preferably internally, to the supporting element 85. An outer contour of the rotation body 106 is formed such that the cable 104 is guided and unreeled/reeled thereon during folding/unfolding (Figs. 3A and 3B). For example, the outer contour can be egg-shaped, wherein an end of the cable 104 is preferably connected to a tip portion of the egg-shaped contour. The cable 104 can be positioned within the rim frame 64, which comprises in this case corresponding openings (not shown). It is clear that the cable 104 can also be provided outside the rim frame 64, as shown in Figs. 3 ― 5. However, the cable 104 is preferably covered by the (not shown) casing (e.g., fabric) of the basket 20, as will be explained below.

Further, the cable 104 preferably is rigid and non-elastical. The cable 104 can be provided with a spring element (not shown). Also, the rotation body 106 can be provided with an (integrated) biasing element such as a spring (not shown) for returning the cable 104 from an extracted state (i.e. the unfolded state of the cart 10) into a retracted state (i.e. the folded state of the cart 10). Alternatively, and/or additionally, other returning and/or assisting mechanism can be applied for supporting the folding process of the cart 10.

Optionally, the scissor mechanism of the cross frame 68 can be replaced by any other appropriate (folding) mechanism such as a bellows mechanism without crossingly arranged members. The folding mechanism is to be selected such that forces (weight of the kid, kid-receiving unit 32, pushing/pulling forces, carried-on items, and the like) are securely transferred from the basket 20, in particular from the rim frame 64 where the kid-receiving unit 32 is attached on top of the basket 20, to the base frame 18. The relative location (and number) of the stationary rotation points 78 and 100 shown in Figs. 3 ― 5 can be adapted in accordance with the designers' needs.

With reference to Fig. 4 elements of the rim frame 64 and the cross frame 68 will be described in more detail now.

The rim frame 64 can be provided integrally or as a multi-element structure. In Figs. 3 to 5 a multi-element structure is shown. The rim frame 64 may comprise at least one substantially straight lateral element 110 being orientated horizontally in the lateral sections of the frame 64. Fig. 4 exemplarily shows two lateral elements 110. The lateral elements 110 are connected to first downwards bended front element 112 extending substantially in line with the lateral element(s) 110, i.e. parallel to the longitudinal direction X. The first front element 112 is further connected to a second front element 114 which is bended inwardly at the front of the cart 10. The second front element 114 has an L-shape when viewed from above. An inwardly bended end portion of the second front element 114 is orientated horizontally along the width direction Z and may be connected to a third front element 116 being orientated horizontally along the width direction Z. At the rear portion of the rim frame 64 the outer most lateral element 110 may be connected to first to third rear elements 118, 120, and 122. The rear elements 118, 120, and 122 are arranged and configured similarly to the front elements 112, 114, and 116, wherein elevation angles (angle between horizontal and longitudinal direction of the respective element) might deviate. In particular, the elements 110 to 122 form a closed frame structure enhancing the stability and rigidity of the cart 10 significantly.

Also with reference to Fig. 4 one possible embodiment of the base frame 18 will now be described. The base frame 18 can be formed integrally or as a multi-element structure. The base frame 18 of Fig. 4 is a multi-element structure. The base frame 18 of Fig. 4 comprises substantially three elements 124, 126, and 128. The front element 124 is located in a front section of the base frame 18 and might have a U shape, when viewed from above, connecting left and right sides. Central part of the front element 124 extends along the width direction Z, wherein end portions pass in a curved manner into the longitudinal direction X. The front element 124 is arranged substantially horizontal, i.e. in the plane (XZ). The end portions of the front element are coupled to the (left and right) intermediate elements 126. The intermediate elements 126 are located in the lateral sections of the base frame 18, one at each side preferably. The (left and right) intermediate elements 126 are inclined for connecting the higher front element 124 to the deeper arranged (horizontal) rear element 128. Similar to the front element 124, the rear element 128 might have a one-sided open U shape when viewed from above, wherein the lateral portions are slightly longer. The first and third rotation points 78 and 100 are located at the (left and right) lateral portions of the rear element 128. Alternatively, the front element 124 and/or the rear element 128 can be provided as trays, which have an integrated closed bottom area. Still as another option the base frame 18 can be provided with reinforcing transversal struts (not shown) connecting the lateral sections transversally to each other.

The intermediate element 126 forms a vertical step in the base frame 18 which allows rotational support of the front wheels 24 (cf. Fig. 1B). It is clear that the frame 18 can be formed without any step, i.e. horizontally flat, in particular dependent on the support and functionality of the respective wheels 22. Alternatively, the intermediate element 126 could be inclined such that the rear element 128 is positioned higher than the front element 124.

This step has the further advantage of providing an integrated place to seat, at least for a kid (not shown), within the basket 20 if the cart 10 is used as a Bollerwagen (cf. Figs. 1B, 2A and 2B). However, it is preferred to seat the kid in the rear lower part of the (bottom of the) basket 20.Further, bottom plates or trays (not shown) can be provided, in particular to cover the horizontal area surrounded by the front and rear elements 124 and 128. These bottom plates could be made of plastics. In a preferred embodiments the bottom plates are formed as trays, for example, for collecting liquids (e.g. from wet boots, etc.), which trays might be removable for facilitating the cleaning thereof as well as removal of stored items.

Figs. 6A to 6C show perspective views of different stages of the folding/unfolding process of the cart 10 of Figs. 3 to 5. Fig. 6A shows the unfolded state. Fig. 6B shows an intermediate state, wherein the folding process has exemplarily initiated by pushing the handle 42 forward and downwards. Fig. 6C shows the folded state in which the cart 10 is maximally compressed.

It is clear that the basket 10 usually further comprises a casing 130 (Fig. 1B) enclosing and surrounding the rim frame 64 and/or the folding frame 66. The casing 130 forms a wall and might be implemented by fabric, cloth, (removable) panel-like wall elements, and the like. The casing 130 preferably comprises a flexible, durable, and resistant material capable of holding (heavy) items inside the basket, but at the same time ensuring ease of compressing during the folding process. The cloth can be sewed around the rim frame 64 so that the rim frame 64 is not visible for the user. The same applies for the folding frame 66.

The kid-receiving unit 32 either can be coupled directly to the basket 20 (wherein the unit 32 has a correspondingly adapted foundation as exemplarily shown in Fig 1A), or indirectly by means of adapters 41 (Figs. 2C and 2D). One way of coupling the unit 32 to the basket 20 is to clamp the unit vertically on, or transversally between, the rim 36. The unit 32 and/or the rim frame 64 can be provided with appropriate engagement mechanisms (such as tongue/groove connection, push buttons, pin/hole connections, keying connections, dovetail connections, etc.). The unit 32 can be put on top of the rim 36, or is at least fixed to an upper part of the basket 20.

In the above description the terms "couple" and "connect" have different meanings. If two elements are coupled to each other, they are not required to be in direct (physical) contact (although they could). Intermediate elements can be present between the coupled elements, whereas connected elements are in direct contact to each other.

### List of reference numerals

- 10: cart
- 12: chassis
- 14: lower portion
- 16: upper portion
- 18: (rigid) base frame
- 20: (collapsible) basket
- 22: wheels
- 24: front wheels
- 26: rear wheels
- 28: rotational axis of 22/24
- 30: travelling direction
- 32: kid-receiving unit
- 34: child seat
- 35: infant carrycot
- 36: upper rim of 20
- 38: top opening of 20
- 40: relative-position adjustment directions of 32
- 41: adapter
- 42: handle/bar
- 44: extension direction of 42
- 46: rotation axis of 42
- 48: rotational movement of 42
- 50: folding movement
- 60: frame structure
- 62: basket frame
- 64: rim frame
- 66: folding frame
- 67: frame members
- 68: cross frame
- 70: 1 st cross member
- 72: 2nd cross member
- 74: long hole
- 76: pin
- 77: 1st end portion of 70
- 78: 1st rotation point
- 80: 1st sliding point
- 82: 2nd rotation point
- 84: 2nd end portion of 70
- 85: supporting element
- 86: 1st end portion of 72
- 88: 2nd end portion of 72
- 90: slide rail
- 92: long hole of 90
- 94: pin
- 95: sliding path
- 96: 2nd sliding point
- 98: transversal section of 42
- 100: 3rd rotation point
- 102: cable-pull mechanism
- 104: cable of 102
- 106: rotation body of 102
- 108: rotation axis of 106
- 110: straight lateral elements of 64
- 112: 1st front element of 64
- 114: 2nd front element of 64
- 116: 3rd front element of 64
- 118: 1st rear element of 64
- 120: 2nd rear element of 64
- 122: 3rd rear element of 64
- 124: front element of 18
- 126: intermediate element of 18
- 128: rear element of 18

## Claims

1. A multi-functional utility cart (10) comprising a chassis (12) and a kid-receiving unit (32), the kid-receiving unit (32) being chosen among an infant carrycot (35), a toddler/child seat (34), or a child car seat, wherein the cart (10) has a front section, first and second lateral sections, and a rear section when viewed circumferentially, wherein the chassis (12) has lower and upper portions (14, 16) and includes:
a non-collapsible rigid base frame (18) in the lower portion (14), to which
base frame (18) a plurality of wheels (22) is attachable; and **characterized in that** it includes:
a vertically collapsible basket (20), wherein the basket (20) is coupled to the base frame (18), wherein the basket (20) is vertically erectable and collapsible independently from the base frame (18), wherein the basket (20) further comprises a collapsible basket frame (62) which includes a rigid rim frame (64) and a foldable folding frame (66), wherein the folding frame (66) connects the rim frame (64) vertically foldable to the base frame (18); wherein the basket (20), in an erected state of the basket (20), carries and receives the kid-receiving unit (32) on top of the rim frame (64) of the basket (20).

2. The cart (10) of claim 1, wherein the folding frame (66) is provided in at least one of the lateral sections of the basket (20).

3. The cart (10) of claim 2, wherein the folding frame (66) is foldable scissor-like.

4. The cart (10) of claim 2 or 3, wherein the folding frame (66) comprises at least one cross frame (68), which includes first and second, preferably straight, cross members (70, 72).

5. The cart (10) of claim 4, wherein the cross members (70) are slidingly coupled to each other, lower end portions (77, 86) of the cross members (70, 72) are rotatably connected to the base frame (18), preferably to a rear element (128) of the base frame (18), and upper end portions (84, 88) of the cross members (70, 72) are coupled to the rim frame (64).

6. The cart (10) of any of claims 1 to 5 further comprising a handle (42) being connected to the basket (20) only.

7. The cart (10) of any of claims 2 to 5, and claim 6 further comprising a cable-pull mechanism (102) being coupled to the handle (42) and the basket frame (62) only, wherein the cable-pull mechanism (104) preferably comprises a cable (104) and a rotation body (106) being rotatably connected to the handle (42), the rim frame (64) and the folding frame (66).

8. The cart (10) of any of claims 2 to 7, wherein the handle (42) is supported and configured such that, in a folded state of the cart (10), the handle (42) is arranged closely above the base frame (18), and the rim frame (64) is arranged and configured such that the rim frame (64) dips into the base frame (18) and is surrounded by the handle (42) upon folding of the basket (18).

9. The cart (10) of any of claims 1 to 8, wherein the base frame (18) comprises:
at least one front element (124);
at least one intermediate element (126); and
at least one rear element (128);
wherein the front elements (124), the intermediate elements (126), and
the rear elements (128) commonly form the base frame (18) in a circumferentially closed manner.

10. The cart (10) of claim 9, wherein the intermediate elements (126) are inclined such that one of the front and rear elements (124, 128) is arranged above the other one.

11. The cart (10) of claim 10, wherein at least the front and rear elements (124, 128) either are configured as, or are configured to receive, trays forming the, preferably removable, bottom of the basket (20).

## Patentansprüche

1. Multifunktioneller Vielzweckwagen (10), der ein Chassis (12) und eine Aufnahmeeinheit (32) für Kleine umfasst, wobei die Aufnahmeeinheit (32) für Kleine aus einer Babytragetasche (35), einem Kleinkinder-/Kindersitz (34) oder einem Autokindersitz gewählt ist, wobei der Wagen (10) einen vorderen Bereich, einen ersten und zweiten seitlichen Bereich und einen hinteren Bereich, wenn umfänglich betrachtet, aufweist, wobei das Chassis (12) einen unteren und einen oberen Abschnitt (14, 16) aufweist und Folgendes beinhaltet:
einen nicht klappbaren starren Grundrahmen (18) im unteren Abschnitt (14), wobei am Grundrahmen (18) eine Vielzahl von Rädern (22) befestigbar ist; und
**dadurch gekennzeichnet, dass** er Folgendes beinhaltet:
einen vertikal klappbaren Korb (20), wobei der Korb (20) an den Grundrahmen (18) gekoppelt ist, wobei der Korb (20) unabhängig vom Grundrahmen (18) vertikal aufstellbar und klappbar ist, wobei der Korb (20) ferner einen klappbaren Korbrahmen (62) umfasst, der einen starren Randrahmen (64) und einen faltbaren Faltrahmen (66) beinhaltet, wobei der Faltrahmen (66) den Randrahmen (64) vertikal faltbar mit dem Grundrahmen (18) verbindet; wobei der Korb (20) in einem aufgestellten Zustand des Korbs (20) die Aufnahmeeinheit (32) für Kleine auf dem Randrahmen (64) des Korbs (20) trägt und aufnimmt.

2. Wagen (10) nach Anspruch 1, wobei der Faltrahmen (66) in mindestens einem der seitlichen Bereiche des Korbs (20) bereitgestellt ist.

3. Wagen (10) nach Anspruch 2, wobei der Faltrahmen (66) scherenartig faltbar ist.

4. Wagen (10) nach Anspruch 2 oder 3, wobei der Faltrahmen (66) mindestens einen Querrahmen (68) umfasst, der ein erstes und ein zweites vorzugsweise gerades Querelement (70, 72) beinhaltet.

5. Wagen (10) nach Anspruch 4, wobei die Querelemente (70) gleitbar aneinandergekoppelt sind, untere Endabschnitte (77, 86) der Querelemente (70, 72) drehbar mit dem Grundrahmen (18) verbunden sind, vorzugsweise an einer hinteren Komponente (128) des Grundrahmens (18), und obere Endabschnitte (84, 88) der Querelemente (70, 72) an den Randrahmen (64) gekoppelt sind.

6. Wagen (10) nach einem der Ansprüche 1 bis 5, der ferner einen Handgriff (42) umfasst, der nur mit dem Korb (20) verbunden ist.

7. Wagen (10) nach einem der Ansprüche 2 bis 5 und Anspruch 6, der ferner einen Seilzugmechanismus (102) umfasst, der nur an den Handgriff (42) und den Korbrahmen (62) gekoppelt ist, wobei der Seilzugmechanismus (104) vorzugsweise ein Seil (104) und einen Drehkörper (106), der mit dem Handgriff (42), dem Randrahmen (64) und dem Faltrahmen (66) drehbar verbunden ist, umfasst.

8. Wagen (10) nach einem der Ansprüche 2 bis 7, wobei der Handgriff (42) derart gestützt und ausgelegt ist, dass der Handgriff (42) in einem gefalteten Zustand des Wagens (10) dicht über dem Grundrahmen (18) angeordnet ist, und der Randrahmen (64) derart angeordnet und ausgelegt ist, dass der Randrahmen (64) in den Grundrahmen (18) taucht und nach dem Falten des Korbs (18) vom Handgriff (42) umgeben ist.

9. Wagen (10) nach einem der Ansprüche 1 bis 8, wobei der Grundrahmen (18) Folgendes umfasst:
mindestens eine vordere Komponente (124);
mindestens eine Zwischenkomponente (126) und
mindestens eine hintere Komponente (128);
wobei die vorderen Komponenten (124), die Zwischenkomponenten (126) und die hinteren Komponenten (128) zusammen den Grundrahmen (18) in einer umfänglich geschlossenen Weise bilden.

10. Wagen (10) nach Anspruch 9, wobei die Zwischenkomponenten (126) derart geneigt sind, dass eine der hinteren Komponenten (124, 128) über der anderen angeordnet ist.

11. Wagen (10) nach Anspruch 10, wobei mindestens die vorderen und die hinteren Komponenten (124, 128) entweder als Wannen, die den vorzugsweise entfernbaren Boden des Korbs (20) bilden, ausgelegt sind oder dazu ausgelegt sind, dieselben aufzunehmen.

## Revendications

1. Chariot utilitaire multifonctionnel (10) comprenant un châssis (12) et une unité de réception d'enfant (32), l'unité de réception d'enfant (32) étant choisie parmi une nacelle pour bébé (35), un siège pour bébé/enfant (34) ou un siège de voiture pour enfant, où le chariot (10) a une section avant, des première et seconde sections latérales et une section arrière lorsqu'il est vu circonférentiellement, où le châssis (12) a des parties inférieure et supérieure (14, 16) et comprend :
un cadre de base rigide non pliable (18) dans la partie inférieure (14), cadre de base (18) auquel peuvent être fixées une pluralité de roues (22) ; et
**caractérisé en ce qu'**il comprend :
un panier pliable verticalement (20), où le panier (20) est couplé au cadre de base (18), où le panier (20) est verticalement déployable et pliable indépendamment du cadre de base (18), où le panier (20) comprend en outre un cadre de panier pliable (62) qui comprend un cadre de bord rigide (64) et un cadre pliant pliable (66), où le cadre pliant (66) relie le cadre de bord (64) verticalement pliable au cadre de base (18) ; où le panier (20), dans un état déployé du panier (20), porte et reçoit l'unité de réception d'enfant (32) sur le dessus du cadre de bord (64) du panier (20).

2. Chariot (10) selon la revendication 1, où le cadre pliant (66) est prévu dans au moins l'une des sections latérales du panier (20).

3. Chariot (10) selon la revendication 2, où le cadre pliant (66) est pliable en forme de ciseau.

4. Chariot (10) selon la revendication 2 ou 3, où le cadre pliant (66) comprend au moins un cadre transversal (68), qui comprend des premier et second éléments transversaux (70, 72), de préférence droits.

5. Chariot (10) selon la revendication 4, où les éléments transversaux (70) sont couplés de manière coulissante les uns aux autres, des parties d'extrémité inférieures (77, 86) des éléments transversaux (70, 72) sont reliées de manière rotative au cadre de base (18), de préférence à un élément arrière (128) du cadre de base (18), et des parties d'extrémité supérieures (84, 88) des éléments transversaux (70, 72) sont couplées au cadre de bord (64).

6. Chariot (10) selon l'une quelconque des revendications 1 à 5, comprenant en outre une poignée (42) reliée au panier (20) uniquement.

7. Chariot (10) selon l'une quelconque des revendications 2 à 5, et la revendication 6 comprenant en outre un mécanisme de traction de câble (102) qui est couplé à la poignée (42) et au cadre de panier (62) uniquement, où le mécanisme de traction de câble (104) comprend de préférence un câble (104) et un corps de rotation (106) qui est relié de manière rotative à la poignée (42), au cadre de bord (64) et au cadre pliant (66).

8. Chariot (10) selon l'une quelconque des revendications 2 à 7, où la poignée (42) est supportée et configurée de telle sorte que, dans un état plié du chariot (10), la poignée (42) est agencée étroitement au-dessus du cadre de base (18), et le cadre de bord (64) est agencé et configuré de telle sorte que le cadre de bord (64) plonge dans le cadre de base (18) et est entouré par la poignée (42) lors du pliage du panier (18).

9. Chariot (10) selon l'une quelconque des revendications 1 à 8, où le cadre de base (18) comprend :
au moins un élément avant (124) ;
au moins un élément intermédiaire (126) ; et
au moins un élément arrière (128) ;
où les éléments avant (124), les éléments intermédiaires (126) et les éléments arrière (128) forment en commun le cadre de base (18) d'une manière fermée circonférentiellement.

10. Chariot (10) selon la revendication 9, où les éléments intermédiaires (126) sont inclinés de telle sorte que l'un des éléments avant et arrière (124, 128) est agencé au-dessus de l'autre.

11. Chariot (10) selon la revendication 10, où au moins les éléments avant et arrière (124, 128) sont configurés comme, ou sont configurés pour recevoir, des plateaux formant le fond, de préférence amovible, du panier (20).
